(19) **Europäisches Patentamt**
**European Patent Office**
**Office européen des brevets**

(11) **EP 2 423 253 B1**

(12) **EUROPEAN PATENT SPECIFICATION**

(45) Date of publication and mention
of the grant of the patent:
**30.04.2014 Bulletin 2014/18**

(51) Int Cl.:
*C08L 9/00* *(2006.01)*    *C08K 3/04* *(2006.01)*
*C08K 3/34* *(2006.01)*    *C08K 3/36* *(2006.01)*
*B60C 1/00* *(2006.01)*    *C08L 21/00* *(2006.01)*
*C08L 7/02* *(2006.01)*    *C08K 3/22* *(2006.01)*
*C08K 3/00* *(2006.01)*

(21) Application number: **10767129.9**

(22) Date of filing: **22.04.2010**

(86) International application number:
**PCT/JP2010/057162**

(87) International publication number:
**WO 2010/123072 (28.10.2010 Gazette 2010/43)**

(54) **RUBBER COMPOSITION AND PNEUMATIC TIRE**

KAUTSCHUKZUSAMMENSETZUNG UND LUFTREIFEN

COMPOSITION DE CAOUTCHOUC ET PNEUMATIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.04.2009 JP 2009106285**

(43) Date of publication of application:
**29.02.2012 Bulletin 2012/09**

(73) Proprietor: **Bridgestone Corporation
Tokyo 104-8340 (JP)**

(72) Inventor: **NAKAYAMA, Atsushi
Kodaira-shi
Tokyo 187-8531 (JP)**

(74) Representative: **Waldren, Robin Michael et al
Marks & Clerk LLP
90 Long Acre
London
WC2E 9RA (GB)**

(56) References cited:
**EP-A1- 1 816 143     EP-A1- 1 834 985
EP-A1- 1 857 493     GB-A- 1 125 801
JP-A- 2005 097 576   JP-A- 2006 213 865
JP-A- 2006 213 866   JP-A- 2006 328 135
JP-A- 2006 342 262   JP-A- 2006 348 237
JP-A- 2010 065 126   US-A1- 2004 106 724**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a rubber composition and a tire using the composition, and more specifically, to a rubber composition that is to be applied to a predetermined site of an automotive tire, has a light weight, and realizes low fuel consumption, and a pneumatic tire using the composition.

Background Art

In association with a social demand for energy savings, an automobile has been strongly requested to reduce the heat generation of a rubber for a tire and lower its fuel consumption in recent years. Apossible approach to reducing the heat generation of the tire and lowering the fuel consumption of the automobile is to reduce the loading amount of carbon black or to use carbon black having a large particle diameter. However, such approach causes reductions in the rigidity of the tire and maneuvering stability because the approach reduces reinforcing property and abrasion resistance. Accordingly, it has been difficult to achieve compatibility between the maneuvering stability and the low fuel consumption.
In addition, it has been known that the powder of a polyolefin such as a polyethylene (PE) or a polypropylene (PP) harder than a diene-based rubber and having a lighter specific gravity than that of a filler is compounded instead of the filler into a rubber for reducing the specific gravity of the rubber.
More specifically, for example, Patent Literatures 1 and 2 each disclose that compounding a thermoplastic elastomer or an olefin-based resin into a rubber component achieves compatibility between the fatigue property and low heat-generating property of a rubber. In addition, Patent Literature 3 discloses that compounding a polyolefin mixed with a filler in advance into a rubber composition provides excellent processability and an excellent elastic modulus. Further, Patent Literature 4 discloses that compounding a polyolefin into a rubber composition provides a rubber composition excellent in rubber physical properties while maintaining low fuel consumption property. Patent Literature 5 discloses that a resin-reinforced elastomer using a rubber and a polyolefin as main components is excellent in tensile strength, abrasion resistance, and fatigue resistance.

Citation List

Patent Literature

[PTL 1] JP 07-309974 A
[PTL 2] JP 07-309975 A
[PTL 3] JP 2002-212342 A
[PTL 4] JP 10-265616 A
[PTL 5] JP 2002-12708 A

Summary of Invention

Technical Problem

However, it has been found that the olefin-based powder tends to easily serve as a core for failure because of its poor adhesion with the diene-based rubber. Inaddition, it has been unable to sufficiently lower the specific gravity (density) of the rubber composition to a required extent. Further, foaming the rubber has been problematic in terms of sufficient securement of an elastic modulus and abrasion resistance, though the foaming can lower the density. Therefore, it has been difficult to lower the density, i. e. , to perform a weight reduction without reducing characteristics requested from the rubber composition.
The present invention has been made in view of such circumstances, and an object of the present invention is to provide a rubber composition for reducing the weight of a tire without reducing the durability of the tire such as abrasion resistance and for achieving a high level of balance between the weight reduction and a reduction in the rolling resistance of the tire, and a pneumatic tire using the composition.

Solution to Problem

The above-mentioned problems are solved by the present invention described below.

That is, the invention according to claim 1 of the present invention is a rubber composition, including:

a rubber component formed of a diene-based rubber; and
a filler,

in which when an actual density determined by JIS K6268 method A is represented by dc, and a density and a mass fraction of a component i determined by constituent analysis are represented by di and $\phi$ i, respectively, the actual density, the density, and the mass fraction satisfy a relationship represented by the following formula (1).

$$0.970 \leq dc \cdot \Sigma (\phi i/di) \leq 0.980 \quad \cdots \quad (1)$$

The invention according to claim 2 is the rubber composition according to claim 1, in which the filler includes at least one kind of carbon black, silica, and an inorganic filler represented by a general formula (I):

$nM \cdot xSiO_y \cdot zH_2O$          (I)

where M represents at least one kind selected from a metal selected from aluminum, magnesium, titanium, calcium, and zirconium, and oxides or hydroxides of the metals, hydrates thereof, and carbonates of the metals, and n, x, y, and z represent an integer of 1 to 5, an integer of 0 to 10, an integer of 2 to 5, and an integer of 0 to 10, respectively.

The invention according to claim 3 is the rubber composition according to claim 1 or 2, in which the diene-based rubber includes at least one kind selected from a natural rubber, a polybutadiene rubber, and a styrene-butadiene copolymerized rubber.

The invention according to claim 4 is the rubber composition according to any one of claims 1 to 3, in which a content of the filler is 10 parts by mass or more and 100 parts by mass or less with respect to 100 parts by mass of the rubber component.

The invention according to claim 5 is a pneumatic tire using the rubber composition according to any one of claims 1 to 4.

The invention according to claim 6 is a method of producing the rubber composition according to any one of claims 1 to 4, including:

a rubber-filler composite-producing step of dispersing a filler in a rubber component formed of a diene-based rubber in advance to produce a rubber-filler composite; and
a mixing step of mixing the rubber-filler composite and a rubber compounding material.

The invention according to claim 7 is the method of producing a rubber composition according to claim 6, in which:

the rubber-filler composite-producing step includes the step of dispersing the filler in the rubber component with at least one of a batch-type kneading apparatus and a continuous kneading apparatus; and
the mixing step includes the step of mixing the rubber-filler composite and the rubber compounding material with a batch-type kneading apparatus.
The invention according to claim 8 is the method of producing a rubber composition according to claim 6 or 7, in which the rubber-filler composite-producing step includes the step of producing the rubber-filler composite with a wet master batch.
The invention according to claim 9 is the method of producing a rubber composition according to claim 8, in which:

the wet master batch is obtained by mixing a rubber liquid and a slurry liquid prepared by dispersing the filler in a dispersion solvent; and
a 24M4 DBP oil absorption of the dry filler recovered from the slurry liquid measured in conformity with ISO 6894 is 93% or more of a 24M4 DBP oil absorption of the filler before the dispersion in the dispersion solvent.

The invention according to claim 10 is the method of producing a rubber composition according to claim 8 or 9, in which:

the rubber-filler composite-producing step includes the step of performing kneading with a biaxial kneading extruder; and
a kneading block is used for 10% or more of a length of a rotation axis in the biaxial kneading extruder.

The invention according to claim 11 is the method of producing a rubber composition according to claim 8 or 9, in which:

the rubber-filler composite-producing step includes the step of performing kneading with at least one of a Banbury mixer and a kneader having mating rotors after kneading with a biaxial kneading extruder; and
a kneading block is used for less than 10% of a length of a rotation axis in the biaxial kneading extruder.

The invention according to claim 12 is the method of producing a rubber composition according to claim 8 or 9, in which the rubber-filler composite-producing step includes the step of repeating kneading with a kneader having mating rotors twice or more.

The invention according to claim 13 is the method of producing a rubber composition according to claim 8 or 9, in which the rubber-filler composite-producing step includes the step of repeating kneading with a Banbury mixer twice or more.

Advantageous Effects of Invention

According to the invention according to claim 1 of the present invention, there is obtained a rubber composition that reduces the weight of a tire without reducing the durability of the tire such as abrasion resistance and achieves a high level of balance between the weight reduction and a reduction in the rolling resistance of the tire.

According to the invention according to claim 2, a reinforcing effect can be efficiently enhanced, and compatibility between the abrasion resistance and low heat-generating property (low fuel consumption property) of the composition when turned into a tire can be additionally achieved.

According to the invention according to claim 3, the abrasion resistance, tear resistance, and crack growth resistance of the composition when turned into a tire can be improved.

According to the invention according to claim 4, compatibility between the reinforcing property and low heat-generating property (low fuel consumption property) of the composition when turned into a tire can be achieved, and workability and the like can be improved.

According to the invention according to claim 5, there is obtained a pneumatic tire in which the weight is reduced without reducing the durability such as abrasion resistance and a high level of balance between the weight reduction and a reduction in the rolling resistance is achieved.

According to the invention according to claim 6, a rubber composition that reduces the weight of a tire without reducing the durability of the tire such as abrasion resistance and achieves a high level of balance between the weight reduction and a reduction in the rolling resistance of the tire can be efficiently produced.

According to the invention according to claim 7, a rubber composition that reduces the weight of a tire without reducing the durability of the tire such as abrasion resistance and achieves a high level of balance between the weight reduction and a reduction in the rolling resistance of the tire canbe more efficiently produced.

According to the invention according to claim 8, the dispersibility of the filler in the rubber component is excellent and excellent dynamic characteristics of a vulcanized rubber are obtained. Accordingly, a rubber composition that reduces the weight of a tire without reducing the durability of the tire such as abrasion resistance and achieves a high level of balance between the weight reduction and a reduction in the rolling resistance of the tire can be efficiently produced.

According to the invention according to claim 9, a rubber composition that reduces the weight of a tire without reducing the durability of the tire such as abrasion resistance and achieves a high level of balance between the weight reduction and a reduction in the rolling resistance of the tire canbe more efficientlyproduced.

According to the invention according to claim 10, the dispersibility of the filler in the rubber component is additionally improved, and hence a rubber composition that reduces the weight of a tire without reducing the durability of the tire such as abrasion resistance and achieves a high level of balance between the weight reduction and a reduction in the rolling resistance of the tire can be produced additionally efficiently.

According to the invention according to claim 11, the dispersibility of the filler in the rubber component is additionally improved, and hence a rubber composition that reduces the weight of a tire without reducing the durability of the tire such as abrasion resistance and achieves a high level of balance between the weight reduction and a reduction in the rolling resistance of the tire can be produced additionally efficiently.

According to the invention according to claim 12, the dispersibility of the filler in the rubber component is additionally improved, and hence a rubber composition that reduces the weight of a tire without reducing the durability of the tire such as abrasion resistance and achieves a high level of balance between the weight reduction and a reduction in the rolling resistance of the tire can be produced additionally efficiently.

According to the invention according to claim 13, the dispersibility of the filler in the rubber component is additionally improved, and hence a rubber composition that reduces the weight of a tire without reducing the durability of the tire such as abrasion resistance and achieves a high level of balance between the weight reduction and a reduction in the rolling resistance of the tire can be produced additionally efficiently.

Description of Embodiments

The present invention is hereinafter described with reference to the embodiments.

<Rubber composition and production method therefor>

The rubber composition of this embodiment includes: a rubber component formed of a diene-based rubber; and a filler, in which when an actual density determined by JIS K6268 method A is represented by dc, and a density and a mass fraction of a component i determined by constituent analysis are represented by di and $\phi$i, respectively, the actual density, the density, and the mass fraction satisfy a relationship represented by the following formula (1).

$$0.970 \leq dc \cdot \Sigma \, (\phi i/di) \leq 0.980 \quad \cdots \quad (1)$$

In the above-mentioned formula (1), $\Sigma(\phi i/di)$ is the reciprocal of a density that is theoretical (theoretical density, $1/\Sigma(\phi i/di)$) determined by calculation from the constituent analysis. That is, dc$\cdot\Sigma(\phi i/di)$ is obtained by dividing the actual density dc by the theoretical density and represents a ratio of the actual density dc to the theoretical density. The inventors of the present invention have found that a rubber composition from which a tire excellent in abrasion resistance while achieving a weight reduction can be produced is obtained by setting the actual density dc of the rubber composition finally obtained within a certain range with respect to the theoretical density.

The above-mentioned theoretical density is a density determined from the mass fraction of each constituent by analysis when it is assumed that each component exists in a single, dense state. On the other hand, the actual density depends on a mutual dispersed state of the respective components, and has a low value when the dispersion is poor or conversely has a high value when the dispersion is improved by rubber kneading before vulcanization.

The inventors of the present invention have conducted detailed investigations on a relationship between various conditions for the rubber kneading and the actual density of a rubber after the vulcanization, and the characteristics of each of the resultant rubbers. Thus, the inventors have found the range where a balance between reinforcement by the kneading and a density lowering for a weight reduction becomes optimum, and have identified the range as the ratio (dc$\cdot\Sigma(\phi i/di)$) of the actual density to the theoretical density.

Specifically, the ratio (dc$\cdot\Sigma(\phi i/di)$) of the actual density to the theoretical density in this embodiment falls within the range represented by the following formula (1):

$$0.970 \leq dc \cdot \Sigma \, (\phi i/di) \leq 0.980 \quad \cdots \quad (1)$$

where the actual density dc is determined by JIS K6268 method A, and di and $\phi$i are determined as the density and mass fraction of a component i by the constituent analysis to be described later, respectively.

In addition, (dc$\cdot\Sigma(\phi i/di)$) preferably falls within the range represented by the following formula (1') and more preferably falls within the range represented by the following formula (1").

$$0.971 \leq dc \cdot \Sigma \, (\phi i/di) \leq 0.979 \quad \cdots \quad (1')$$

$$0.972 \leq dc \cdot \Sigma \, (\phi i/di) \leq 0.978 \quad \cdots \quad (1")$$

Setting dc$\cdot(\Sigma\phi i/di)$ within the above-mentioned range can improve reinforcing property in a rubber-filler composite obtained by dispersing the filler in the rubber component, and can achieve compatibility between the abrasion resistance and weight reduction of a tire using the composite.

The actual density dc in this embodiment is obtained as described below. A sample free of any air bubble produced in conformity with JIS K6268 is prepared and the density of the sample is measured by the method A. More specifically, the same sample was subjected to the measurement five times and the average of the measured values was defined as the actual density dc of the sample.

On the other hand, the calculation of the theoretical density ($1/\Sigma\phi i di$) requires the instrumental analysis of a vulcanized rubber (rubber composition) of interest to identify incorporated components and determine the content of each component.

In this embodiment, the constituent analysis of the rubber was basically performed in conformity with a test method specified in JIS. That is, examples of the vulcanized rubber in this embodiment include a styrene-butadiene copolymerized rubber (SBR), an acrylonitrile-butadiene rubber (NBR), and a natural rubber (NR), and rubber composition analysis can be performed by subjecting any such rubber to thermogravimetry, a pyrolysis method, or the like. In addition, composition analysis of, for example, any other vulcanizing agent, a vulcanization accelerator, any other organic additive, carbon black, sulfur, ZnO, or $SiO_2$ in the vulcanized rubber can be performed by Soxhlet extraction prior to the rubber composition analysis or the analysis of a solvent-insoluble portion separated after a cleavage reaction.

More specifically, the analysis is performed in accordance with the following procedure.

(a) Solvent extract

In conformity with JIS K6229, first, the vulcanized rubber is turned into a powder by, for example, cryo-pulverization and then extracted with acetone by using a Soxhlet extractor. The contents of a vulcanizing agent not bonded to any polymer, a vulcanization accelerator, and any other additive are obtained from the extracted portion. It should be noted that the density (di) of the component measured in accordance with JIS K0061 was 1.00.

(b) Rubber component

The content of the rubber component is obtained in conformity with the thermogravimetry method of JIS K6226 or the pyrolysis gas chromatography of JIS K6231. In addition, a rubber species was identified by the infrared spectroscopic analysis method of JIS K6230. It should be noted that the density (di) of each rubber was set to 0.93 for a natural rubber (NR), an isoprene rubber (IR), and a butadiene rubber (BR), 0.92 to 0.97 for the styrene composition of a styrene-butadiene copolymerized rubber, 1.25 for a chloroprene rubber (CR), and 1.02 for an acrylonitrile-butadiene rubber (NBR).

(c) Carbon black

The content of carbon black is obtained in conformity with the pyrolysis method of JISK6227. It should be noted that the density (di) of the component was set to 1.85.

(d) Sulfur

The content of sulfur is obtained in conformity with the oxygen combustion flask method of JIS K6233. It should be noted that the density (di) of the component was set to 1.94.

(e) Zinc oxide (ZnO)

The content of zinc oxide is obtained in conformity with the EDTA titration method of JIS K6233. It should be noted that the density (di) of the component was set to 5.57.

(f) Silicon dioxide ($SiO_2$)

The content of silicon dioxide is obtained in conformity with JIS K6430. It should be noted that the density (di) of the component was set to 1.95.

(g) Other component

The content of ash in the rubber is obtained in conformity with JIS K6228. The ash was defined as the other component. It should be noted that the density of the component actually measured in accordance with JIS K0061 was 1.00.

The mass fractions ($\phi i$) of the respective components i such as the rubber component and the filler in the rubber composition with respect to the entire mass were determined by the foregoing operations, and then the sum of $\phi i/di$ of the respective components was calculated and defined as the theoretical density $1/\Sigma$ ($\phi i/di$).

(Rubber component)

The rubber component that can be used in the rubber composition of this embodiment is a diene-based rubber and is formed of at least one kind of a natural rubber (NR) and a synthetic diene-based rubber. The rubber component may be subjected to a prior operation such as a viscosity reduction or a chemical treatment. Here, the synthetic diene-based rubber is preferably a rubber synthesized by emulsion polymerization or solution polymerization.

Further, specific examples of the synthetic diene-based rubber include a polyisoprene rubber (IR), a styrene-butadiene copolymerized rubber (SBR), a polybutadiene rubber (BR), an ethylene-propylene-diene rubber (EPDM), a chloroprene rubber (CR), a halogenated butyl rubber, and an acrylonitrile-butadiene rubber (NBR). Preferred examples thereof include a natural rubber, a polyisoprene rubber (IR), a polybutadiene rubber (BR), and a halogenated (Br) butyl rubber. From the viewpoints of, for example, low heat-generating property, abrasion resistance, crack growth resistance, and tear resistance, the natural rubber, the polybutadiene rubber (BR), and the styrene-butadiene copolymerized rubber (SBR) are particularly preferably used as the rubber component, and natural rubber is more preferred.

Alternatively, a rubber latex or a rubber solution can be used as the rubber component. A natural rubber latex and/or a synthetic rubber latex, or an organic solvent solution of a synthetic rubber obtained by solution polymerization can each be given as an example of the rubber latex. Of those, the natural rubber latex and/or the synthetic rubber latex are each/is suitable from the viewpoints of, for example, the performance of a master batch to be obtained and the ease with which the master batch is produced.

Examples of the natural rubber latex which may be used include a field latex, an ammonia-treated latex, a centrifugally concentrated latex, a deproteinized latex treated with an enzyme, a latex introduced with a functional group, or a combination thereof. The natural rubber latex is a colloid sol using fine particles of a rubber hydrocarbon as a dispersoid and is electrically negatively charged. The latex is typically stored with its pH adjusted to 9 to 10 by adding ammonia or any other alkali as a stabilizer. The latex contains about 30% of the rubber component, and the concentrated latex is concentrated to 60%.

Examples of the synthetic rubber latex which may be used include a latex of a styrene-butadiene copolymerized rubber, a nitrile rubber, and a polychloroprene rubber.

One kind of the rubber components may be used alone, or two or more kinds thereof may be used as a blend. In addition, the rubber component preferably has a glass transition temperature (Tg) of -110°C or more from the viewpoints of the abrasion resistance and heat resistance of the rubber composition.

(Filler)

The rubber composition of this embodiment contains the filler. Carbon black, silica, clay, talc, calcium carbonate, and aluminum hydroxide can be given as examples of the filler. The kinds of those fillers are not particularly limited, and an arbitrary filler selected from those conventionally used as rubber fillers can be used. In addition, when an inorganic filler such as silica is used, a silane coupling agent may be used in combination.

In this embodiment, it is suitable that the filler should be at least one kind selected from carbon black, silica, and an inorganic filler represented by a general formula (I):

$$nM \cdot xSiO_y \cdot zH_2O \qquad (I)$$

where M represents at least one kind selected from a metal selected from aluminum, magnesium, titanium, calcium, and zirconium, and oxides or hydroxides of the metals, hydrates thereof, and carbonates of the metals, and n, x, y, and z represent an integer of 1 to 5, an integer of 0 to 10, an integer of 2 to 5, and an integer of 0 to 10, respectively.

The use of the inorganic filler represented by the above-mentioned general formula (I) as well as the carbon black and the silica can efficiently enhance a reinforcing effect, and can achieve compatibility between the abrasion resistance and low heat-generating property (low fuel consumption property) of the composition when turned into a tire.

Here, as the carbon black, those typically used in rubber industry can be used, and various grades of carbon black such as SAF, HAF, ISAF, FEF, GPF may be employed alone or as a mixture.

The silica, which is not particularly limited, is preferably wet silica, dry silica, and colloidal silica. Those may be used alone or as a mixture.

Specifically, there can be used as the inorganic filler represented by the general formula (I), alumina ($Al_2O_3$) such as $\gamma$-alumina or $\alpha$-alumina, alumina monohydrate ($Al_2O_3 \cdot H_2O$) such as boehmite or diaspore, aluminum hydroxide [$Al(OH)_3$] such as gibbsite or bayerite, aluminum carbonate [$Al_2(CO_3)_2$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate (such as $Al_2SiO_5$, $Al_4 \cdot 3SiO_4 \cdot 5H_2O$), magnesium silicate (such as $Mg_2SiO_4$, $MgSiO_3$), calcium silicate (such as $Ca_2 \cdot SiO_4$), aluminum calcium silicate (such as $Al_2O_3 \cdot CaO \cdot 2SiO_2$), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], crystalline aluminosilicate containing hydrogen, an alkali metal, or an alkaline earth metal that corrects a charge, such as any one of various zeolites, or the like.

In addition, as the inorganic filler represented by the general formula (I), an inorganic filler in which M represents at least one kind selected from aluminum metal, an oxide or hydroxide of aluminum, hydrates thereof, and a carbonate of aluminum is preferred. Of those, the carbon black, the silica, and aluminum hydroxide are each preferred as the filler.

With regard to the content of the filler, the filler is preferably incorporated in an amount of 10 parts by mass or more and 100 parts by mass or less with respect to 100 parts by mass of the rubber component. Setting the content within the above-mentioned range can achieve compatibility between the reinforcing property and low heat-generating property (low fuel consumption property) of the composition when used in a tire, and can improve workability and the like.

The above-mentioned content is preferably 15 parts by mass or more and 95 parts by mass or less, more preferably 20 parts by mass or more and 90 parts by mass or less.

In the rubber composition of this embodiment, in addition to the rubber component and the filler such as carbon black, rubber compounding materials usually used in rubber industry including oil components such as process oils, vulcanizing agents, vulcanization accelerators, age resistors, softening agents, zinc oxide, antiozonants, colorants, antistatic agents, lubricants, antioxidants, coupling agents, foaming agents, foaming assistants, and stearic acid can be appropriately selected and compounded without impairing the object of this embodiment. Commercialized products can be suitably used as those compounding materials.

The oil component such as a process oil is not particularly limited, and any oil component can be appropriately selected and used depending on purposes. Examples of the oil component include an aromatic oil, a naphthene-based oil, a paraffin-based oil, an ester-based oil, a solution-like conjugated diene rubber, and a solution-like, hydrogenated conjugated diene rubber. The incorporation of the oil component into the rubber composition is advantageous because of the following reason. As the incorporation enables the control of the flowability of the rubber composition, the rubber composition can be extruded extremely satisfactorily by reducing the viscosity of the rubber composition before vulcanization to improve the flowability.

Further, as the vulcanizing agent, in addition to the conventionally used sulfur, at least one kind of organic thiosulfate compounds (such as sodium 1,6-hexamethylene dithiosulfate dihydrate) and bismaleimide compounds (such as phenylene bismaleimide) may be used in combination.

Further, examples of the vulcanization accelerator include thiuram compounds such as tetrakis-2-ethylhexyl thiuram disulfide, tetrakis-2-isopropyl thiuram disulfide, tetrakis-dodecyl thiuram disulfide, and tetrakis-benzyl thiuram disulfide; dithiocarbamic acid salt compounds such as zinc di-2-ethylhexyldithiocarbamate, zinc dodecyl dithiocarbamate, and zinc benzyl dithiocarbamate; and benzothiazolyl vulcanization accelerators such as dibenzothiazyl disulfide, 4,4'-dimethyldibenzothiazyl disulfide, N-cyclohexyl-2-benzothiazyl-sulfenamide, N-t-butyl-2-benzothiazyl-sulfenamide, N-t-butyl-2-benzothiazyl-sulfenimide, N-oxydiethylene-benzothiazyl-sulfenamide, and N,N'-dicyclohexyl-2-benzothiazyl-sulfenamide.

Further, examples of the age resistor include 3C(N-isopropyl-N'-phenyl-p-phenylenediamine, 6C[N-(1,3-dimethylbutyl)-N'-phenyl-p-phenylenediamine], AW(6-ethoxy-2,2,4-trimethyl-1,2-dihydroquinoline), and a high-temperature condensation product of diphenylamine and acetone.

The rubber composition of this embodiment canbe produced by, for example, kneading, warming, extruding, and vulcanizing, for example, the rubber component, the resin, and the other compounding agent appropriately selected as required.

Conditions for the kneading are not particularly limited, and can be appropriately selected from various conditions such as the amount in which each component is loaded into a kneading apparatus, the rotational speed of a rotor, a rampressure, a kneading temperature, a kneading time, and the kind of the kneading apparatus. Examples of the kneading apparatus include: uniaxial kneading extruders and multi-axial kneading extruders (continuous kneading apparatuses) to be generally used in the kneading of rubber compositions; and kneading machines and rolls (batch-type kneading apparatuses) having mating or non-mating rotating rotors such as a Banbury mixer, an intermix, and a kneader. Two or more kinds of those apparatuses may be used in combination.

In this embodiment, the master batch of the rubber component and the filler (rubber-filler composite) is produced in advance before mixing with a rubber compounding material in order that the dispersibility of the filler in the rubber composition may be improved.

A method of producing the above-mentioned master batch containing the rubber component and the filler is not particularly limited, and the master batch can be obtained through a wet master batch or a dry master batch. Of those, the wet master batch is preferred in order that excellent dispersion of the filler in the rubber component and excellent dynamic characteristics typified by the failure characteristic of a vulcanized rubber may be achieved.

Hereinafter, a method of producing the master batch in this embodiment and a method of producing a rubber composition using the master batch are given.

(In case of dry master batch)

The dry master batch containing the rubber component and the filler can be typically obtained by kneading a block-like natural rubber or synthetic rubber and the filler such as carbon black or silica (rubber-filler composite-producing step). A representative kneading machine (first kneading machine) is, for example, a tangential (non-mating) internal mixer (which may hereinafter be referred to as "tangential Banbury mixer") or a biaxial kneading extruder. Of those, the tangential Banbury mixer is preferred because the block-like rubber mates well with the mixer.

In addition, the biaxial kneading extruder is preferred as a kneading machine to be used in a method of producing the wet master batch containing the rubber component and the filler (rubber-filler composite), the production method being described in detail later, because the biaxial kneading extruder can simultaneously perform dehydration drying and the dispersion of the filler in the rubber component. Alternatively, a squeezer, a centrifugal water-absorbing machine, an expansion, and a dryer may be combined.

It is suitable that the above-mentioned master batch containing the rubber component and the filler should be obtained by further mixing the kneaded rubber component-filler (wet) master batch described in the foregoing with the rubber compounding material by using a second kneading machine (mixing step).

The second kneading machine is preferably one selected from a mating internal mixer in which two rotors mate with each other (which may hereinafter be referred to as "mating Banbury mixer"), the tangential Banbury mixer, an open roll, and a kneader.

Of those, the mating Banbury mixer is preferably used as the second kneading machine. Here, the tangential Banbury mixer described in the foregoing section of the first kneading machine and the mating Banbury mixer preferred as the second kneading machine are described.

The main kneading action of the tangential Banbury mixer of such a structure that the outermost diameters of two rotors do not contact each other is a shearing action between the edge of a rotor tip and a casing inner surface. A material quickly engages with the mixer, and hence the mixer is applicable to a wide range of compounds. However, for example, rubber chemicals having a low melting point and a low softening point may adhere to the above-mentioned casing inner surface to make work difficult, or may undergo slippage during the kneading to cause faulty dispersion of the chemicals.

On the other hand, the main kneading action of the mating Banbury mixer in which the two rotors mate with each other is a crushing and kneading action between the two rotors. The mixer applies a large shear force to a rubber and cools a large area of the rubber. Accordingly, the mixer has such a feature that an increase in the temperature of a compounding material is suppressed while the dispersibility of the material is improved, and is hence particularly preferred for the kneading of, for example, a rubber compounding material having a low melting point and a low softening point.

(In case of wet master batch)

Next, a method of producing the above-mentioned wet master batch containing the rubber component and the filler (which may hereinafter be simply referred to as "wet master batch") and a method of producing a rubber composition are described in detail.

In this case, it is suitable that the production should follow (a) the step of turning rubber compounding materials into liquids, (a') the step of mixing these liquids, (a") the step of subjecting the mixed liquid to a coagulation treatment, (b) the step of taking out the coagulated product formed in the step (a), and (c) the step of kneading the coagulated product taken out in the step (b) with a first kneading machine to dry the product and to disperse a filler in the product, and (d) the step of further mixing a rubber compounding material into the coagulated product dried in the step (c) with a second kneading machine. It should be noted that the above-mentioned steps (a) to (c) correspond to the rubber-filler composite-producing step in this embodiment, and the step (d) corresponds to the mixing step in this embodiment.

-Step (a)-

The step is the step of turning the rubber compounding materials into liquids.

A natural rubber latex and/or a synthetic rubber latex, or an organic solvent solution of a synthetic rubber obtained by solution polymerization can each be given as an example of the rubber liquids to be used in the step (a). Of those, the natural rubber latex and/or the synthetic rubber latex are each/is suitable from the viewpoints of, for example, the performance of a wet master batch to be obtained and the ease with which the master batch is produced.

Examples of the natural rubber latex which may be used include a field latex, an ammonia-treated latex, a centrifugally concentrated latex, a deproteinized latex treated with an enzyme, or a combination thereof. Further, examples of the synthetic rubber latex which may be used include a latex of a styrene-butadiene copolymerized rubber, a nitrile rubber, and a polychloroprene rubber.

-Step (a')-

The step is the step of mixing the liquid rubber materials obtained in the step (a).

In the method of producing the wet master batch, the rubber liquids preferably contain a slurry liquid prepared by dispersing at least one kind of filler selected from carbon black, silica, and an inorganic filler represented by the general formula (I) in a dispersion solvent with a high-speed shear mixer.

The above-mentioned high-speed shear mixer to be used in the preparation of the slurry liquid is a high-speed shear mixer formed of a rotor and a stator portion. The rotor rotating at a high speed and the fixed stator are installed with a narrow clearance therebetween, and a high shear rate is produced by the rotation of the rotor. It should be noted that the term "high-speed shear" means that the shear rate is 2,000/s or more, preferably 4,000/s or more.

A commercial product of the high-speed shear mixer is, for example, a Homomixer manufactured by Tokushu Kika Kogyo, a Colloid Mill manufactured by PUC in Germany, a CAVITRON manufactured by CAVITRON in Germany, or a High-Shear Mixer manufactured by Silverson Machines, Inc. in England.

The characteristics of the slurry liquid obtained by using the high-speed shear mixer are preferably as described below.

> (i) The particle size distribution of the filler in the slurry liquid is such that a volume-average particle diameter (mv) is 25 $\mu$m or less and a 90-vol% particle diameter (D90) is 30 $\mu$m or less, and
> (ii) the 24M4 DBP oil absorption of the dry filler recovered from the slurry liquid is kept at 93% or more of its 24M4 DBP oil absorption before the dispersion in the dispersion solvent. Here, the 24M4 DBP oil absorption is a value measured in conformity with ISO 6894.

It is more preferred that the volume-average particle diameter (mv) be 20 $\mu$m or less and the 90-vol% particle diameter (D90) be 25 $\mu$m or less. An excessively large particle size may deteriorate the dispersion of the filler in the rubber, thereby resulting in the deterioration of reinforcing property and abrasion resistance.

On the other hand, the application of an excessive shear force to the slurry for reducing a particle size breaks the structure of the filler, thereby causing a reduction in reinforcing property. The 24M4 DBP oil absorption of the filler recovered from the slurry liquid and dried is desirably 93% or more of the 24M4 DBP oil absorption of the filler before the dispersion in the dispersion solvent. The 24M4 DBP oil absorption is more preferably 96% or more.

The concentration of the filler in the slurry liquid is set to preferably 1 mass% or more and 15 mass% or less, in particular, more preferably 2 mass% or more and 10 mass% or less. Setting the concentration of the filler within the above-mentioned range can make the volume of the slurry and the viscosity of the slurrymoderate, thereby resulting in improved workability.

In this embodiment, the slurry liquid is preferably a water-dispersed slurry liquid particularly from the viewpoint of mixing property when a natural rubber latex and/or a synthetic rubber latex are each/is used as a rubber liquid.

-Step (a")-

The step is the step of subjecting the mixed liquid obtained in the mixing step to the coagulation treatment.

For example, a method involving charging the slurry liquid into a homomixer and dropping a latex while stirring the slurry liquid or conversely a method involving dropping the slurry liquid to the latex while stirring the latex is available for the mixing of the slurry liquid and the rubber liquids. Alternatively, for example, a method involving mixing a slurry flow and a latex flow having a certain flow rate ratio under the condition of vigorous water-power stirring is available.

In the step (a), the rubber liquids, preferably the rubber liquids containing the slurry liquid obtained as described in the foregoing are subjected to the coagulation treatment so that a coagulated product may be formed. The coagulation is performed by a conventionally known method such as a method involving adding an acid such as formic acid or sulfuric acid and a coagulant made of a salt such as sodium chloride while applying heat or a shear force caused by stirring or the like. In addition, a plurality of means may be combined.

-Step (b) and step (c)-

The step (b) is a step involving taking out the coagulated product formed in the step (a) with conventionally known solid-liquid separation means and sufficiently washing the coagulated product. A water washing method is typically adopted for the washing.

The step (c) is the step of kneading the coagulated product taken out and sufficiently washed in the step (b) with the first kneading machine under the application of a mechanical shear force to dry the product and to disperse the filler in the product.

In the step (c), an operation is preferably performed in a continuous fashion from the viewpoint of industrial productivity because the kneading and the drying are performed with the first kneading machine while the mechanical shear force is applied. Although an apparatus provided with a uniaxial screw can also be used, a multi-axial kneading extruder in which axes rotate in the same direction or in different directions is more preferably used. For example, a kneader having two mating rotors that mate with each other or a Banbury mixer can be suitably used as the first kneading machine. In this case, the kneading is repeated preferably twice ormore, more preferably three times or more. Inaddition, thereafter, kneading with a biaxial kneading extruder may be further performed.

In addition, a biaxial kneading extruder is particularly preferably used.

When the kneading is performed with the above-mentionedbiaxial kneading extruder, a kneading block is preferably used for 10% or more of the length of each rotation axis in the biaxial kneading extruder, and the kneading block is more preferably used for 20% or more thereof. In addition, thereafter, kneading with a Banbury mixer or a kneader having mating rotors may be further performed.

On the other hand, when the kneading block is used for less than 10% of the length of each rotation axis in the biaxial kneading extruder (the kneading block may be preferably absent), kneading is preferably performed with at least one of the Banbury mixer and the kneader having mating rotors after the kneading with the biaxial kneading extruder.

Subj ecting the coagulatedproduct to such kneading as described above improves the dispersibility of the filler in the rubber component and enables the setting of the ratio of the actual density to the theoretical density within the range represented by the formula (1).

-Step (d)-

The step (d) is the step of further mixing a rubber compounding material into the dried wet master batch obtained in the step (c) with the second kneading machine to provide a rubber compounding material-containing master batch. Here, the dried state means that a moisture content is sufficiently low, specifically refers to a state in which the content of volatile matter in the rubber is 5 mass% or less, preferably 3 mass% or less. It should be noted that the measurement was performed in conformity with JIS K6238.

The second kneading machine is preferably one selected from a mating internal mixer in which two rotors mate with each other (which may hereinafter be referred to as "mating Banbury mixer"), a tangential Banbury mixer, an open roll, and a kneader.

Of those, a batch-type kneading machine such as the tangential or mating Banbury mixer is preferably used as the second kneading machine.

In addition, a continuous kneading machine (continuous kneading apparatus) typified by a biaxial kneading extruder typically shows a larger variation in compounding amount per unit volume than a batch-type kneading machine (batch-type kneading apparatus) typified by a Banbury mixer does. Accordingly, the batch-type kneading machine such as a Banbury mixer is preferred for uniformly dispersing a small compounding amount of rubber chemicals in the rubber composition.

It should be noted that the first kneading machine, the second kneading machine, and the rubber compounding materials concerning the above-mentioned wet master batch are the same as those described in the foregoing.

The rubber composition of this embodiment can find use in tire applications such as tire treads, under treads, carcasses, side walls, and bead portions and in applications including rubber vibration insulators, fenders, belts, hoses, and other industrial products by being subjected to molding and vulcanization after the kneading with the kneading machines. In particular, the rubber composition is suitably used as a rubber for the treads of a low-fuel consumption tire, a large tire, and a high-performance tire excellent in balance among low heat-generating property, abrasion resistance, and failure strength.

<Pneumatic tire>

A pneumatic tire of this embodiment uses the rubber composition. That is, the pneumatic tire of this embodiment is obtained by incorporating the rubber composition into any one of the tire constituting members. Examples of the tire constituting member include tread, under tread, side wall, carcass coating rubber, belt coating rubber, bead filler rubber, chafer, bead coating rubber, and cushion rubber.

When a pneumatic tire is produced by using the rubber composition of this embodiment, the production can be performed by such a method as described below. A bead filler member or a side-reinforcing rubber for a run flat tire is produced with, for example, an extruder or a calender. A green tire is produced by, for example, attaching any such product to any other member on a molding drum. The green tire is placed in a tire mold and vulcanized while a pressure is applied from inside the mold. In addition, the inside of the tire of this embodiment can be filled with nitrogen or an inert gas as well as air.

The pneumatic tire is suitably, for example, apneumatic tire having a pair of bead portions, a carcass that ranges along the bead portions in a troidal fashion, a belt that hoops the crown portion of the carcass, and a tread. It should be noted that the pneumatic tire of this embodiment may have a radial structure or may have a bias structure.

The pneumatic tire of this embodiment thus obtained is excellent in, for example, reinforcing property and abrasion resistance, and achieves a weight reduction.

Although the present invention has been described above by way of the embodiment, the present invention is not limited to the above-mentioned embodiment, and any change or modification can be made to such an extent that the change or modification does not deviate from the object of the invention.

Examples

Next, this embodiment is described in more detail with reference to examples. However, this embodiment is not limited by these examples.

<Preparation of test composition>

(Test composition 1)

(1) Preparation of slurry liquid

Carbon black (N220) was incorporated at a ratio of 5 mass% into water and finely dispersed with a High-Shear Mixer manufactured by Silverson Machines, Inc. Thus, a slurry liquid wad produced.

In addition, the 24M4 DBP oil absorption of the carbon black (CB) before the dispersion was 98 mL/100 g, and the 24M4 DBP oil absorption of the CB recovered from the slurry and dried was 94 mL/100 g. It should be noted that the 24M4 DBP oil absorption was measured in conformity with ISO 6894.

(2) Preparation of test composition

28 Kilograms of the slurry liquid produced in the above-mentioned section (1) and 30 kg of a natural rubber latex with its dry rubber content adjusted to 10 mass% were mixed while being stirred. After that, the pH of the mixture was adjusted to 4.5 with formic acid so that the mixture was coagulated. The coagulated product was taken by filtration and sufficiently washed. Thus, 8.95 kg of a wet coagulated product were obtained. The coagulated product was regarded as a test composition 1.

(Test composition 2)

The test composition 1 was placed in a heating oven and dried at 110°C for 2 hours. The resultant was regarded as a test composition 2.

(Test composition 3)

(1) Preparation of slurry liquid

Carbonblack (N220 manufactured by Cabot Corporation) was mixed with deionized water in a carbon black slurry tank provided with a stirrer. The resultant coarse slurry having 12.5 mass% of the carbon black was continuously sucked with an air diaphragm pump and delivered into a colloid mill for the first dispersion. Subsequently, the slurry was delivered into a homogenizer with a progressing cavity pump. Thus, a smoothly ground slurry was obtained. The 24M4 DBP oil absorption of the CB recovered from the slurry and dried was 95 mL/100 g.

(2) Preparation of composition

3 0 Kilograms of a natural rubber field latex with its dry rubber content adjusted to 10 mass% were supplied at a constant rate to 11.2 kg of the slurry liquid produced in the section (1) under the following conditions while the slurry liquid was stirred. While the flow rate of the latex was automatically measured and adjusted with a valve, a ratio of a latex supply rate to a carbon black slurry supply rate was properly maintained. Thus, a composition was obtained.

(3) Preparation of test composition

The composition was placed in a heating oven and dried at 110°C for 2 hours. The resultant was regarded as a test composition 3.

(Test composition 4)

The wet composition in the preparation of the test composition 3 was placed in a dehydration extruder and dehydrated so that its wetness was about 5 to 10 mass%. Next, the dehydrated composition was caused to fall into a second extruder, and was then compressed and heated again. When the extrusion temperature of the product was set to about 150°C, its moisture content was about 0.5 to 1 mass%. After that, the product was rapidly cooled to about 4.0°C with a conveyor vibrating with air pressure. The resultant composition was regarded as a test composition 4.

<Example 1>

(Production of rubber composition)

The test composition 1 was loaded into a biaxial kneading extruder "KTX-30" manufactured by Kobe Steel, Ltd., and was then kneaded (rubber-filler composite-producing step). More specifically, a kneading block was used for 15% of the length of each rotation axis and the rest of the axis was passed through a screw segment for conveyance.
Under compounding conditions shown in Table 1, the test composition 1 after kneading was subjected to first kneading (60 rpm, filling factor: 60%, falling temperature: 150°C, 3 minutes) and second kneading (45 rpm, filling factor: 60%, falling temperature: 100°C, 1 minute) using a kneader having mating rotors (Intermix K1 manufactured by HITACHI MACHINE Co., Ltd.). The resultant composition was then vulcanized by an ordinary method. Thus, a vulcanized rubber composition 1 was obtained. The rubber composition 1 was evaluated as follows.
[Table 1]

Table 1

| | Material | | Number of parts by mass |
|---|---|---|---|
| First kneading stage | Master batch (test composition 1) | Natural rubber | 100 |
| | | Carbon black*1 | 47.1 |
| | Stearic acid*2 | | 2.4 |
| | Age resistor (6C)*3 | | 1.7 |
| | Wax*4 | | 1.0 |
| Second kneading stage | Age resistor (RD)*5 | | 0.4 |
| | Vulcanization accelerator (CZ)*6 | | 0.9 |
| | Vulcanization accelerator (DM)*7 | | 1.5 |
| | Sulfur | | 2.2 |
| | Zinc white | | 3.1 |
| | Retarder*8 | | 0.2 |
| Total | | | 160.5 |

*1: N220 manufactured by Cabot Corporation
*2: Stearic Acid #700 manufactured by New Japan Chemical Co. , Ltd.
*3 : NOCRAC 6C manufactured by OUCHI SHINKO CHEMICAL INDUSTRIAL CO. , LTD.
*4 : SUNTIGHTA (microcrystalline wax) manufactured by Seiko Chemical Co., Ltd.
*5: NONFLEX RD manufactured by Seiko Chemical Co., Ltd.
*6: NOCCELER CZ (N-cyclohexylbenzothiazole-2-sulfenamide) manufactured by OUCHI SHINKO CHEMICAL INDUSTRIAL CO., LTD.
*7: NOCCELER DM (di-2-benzothiazyl-disulfide) manufactured by OUCHI SHINKO CHEMICAL INDUSTRIAL CO., LTD.
*8: Retarder CTP manufactured by Toray Fine Chemicals Co., Ltd.

(Calculation of density ratio)

The mass fractions of the respective components were determined for the rubber composition 1 by the analysis methods described in the foregoing, and then its theoretical density $1/\Sigma(\phi i/di)$ was calculated from the mass fractions.

Meanwhile, the actual density dc of the rubber composition 1 was determined by JIS K6268 method A described in the foregoing, and then the density ratio dc·($\Sigma$ $\phi$i/di) was calculated from the densities.

Table 2 shows the result together with the results of the analysis.

(Evaluation for tire performance (tire size: 11R22.5))

A tire with a TBR size of 11R22.5 was prototyped by using the rubber composition as a tread rubber, and then the tire was evaluated for the following items.

(1) Tire weight

The weight of the resultant tire was measured.

(2) Evaluation for rolling resistance

A rolling resistance at 80 km/h was measured under a normal load and a normal internal pressure, and was then represented as an index by setting a value for each of Comparative Examples 3 and 5 to 100. A smaller numerical value means that the rolling resistance is lower.

(3) Evaluation for abrasion resistance

The test tire was mounted on a drive shaft of a truck. Its abrasion loss after 100,000 km of driving was measured, and was then represented as an index by setting a value for each of Example 2 and Comparative Example 5 to 100. A larger value for the index means that the abrasion resistance is better.

Table 2 shows the results collectively.

<Example 2>

The production of a rubber composition and a tire was performed in the same manner as in Example 1 except that a kneading disk was used for 25% of the length of each rotation axis of the biaxial kneading extruder in the production of the rubber composition of Example 1. Then, similar evaluations were performed.

Table 2 shows the results.

<Example 3>

The production of a rubber composition and a tire was performed in the same manner as in Example 1 except that in the production of the rubber composition of Example 1, preliminary kneading was performed with a Banbury mixer (00C Banbury manufactured by Kobe Steel, Ltd.) under the conditions of 80°C and 70 rpm for 3 minutes after the kneading with the biaxial kneading extruder and before the kneading for adding the rubber compounding materials. Then, similar evaluations were performed.

Table 2 shows the results.

<Example 4>

The production of a rubber composition and a tire was performed in the same manner as in Example 3 except that in the production of the rubber composition of Example 3, preliminary kneading was performed with a Banbury mixer (00C Banbury manufactured by Kobe Steel, Ltd.) for 2 minutes, and with a kneader having mating rotors (Intermix K1 manufactured by HITACHI MACHINE Co., Ltd.) for 2 minutes after the kneading with the biaxial kneading extruder was performed while the screw segment for conveyance was used for the entire length of each rotation axis. Then, similar evaluations were performed.

Table 2 shows the results.

<Example 5>

The production of a rubber composition and a tire was performed in the same manner as in Example 1 except the following. In the production of the rubber composition of Example 1, the test composition 3 was used instead of the test composition 1, a kneader having mating rotors (Intermix K1 manufactured by HITACHI MACHINE Co., Ltd.) was used instead of the biaxial kneading extruder, and a kneading operation at a number of revolutions of 60 rpm and a filling factor of 60% for 3 minutes was repeated twice so that a rubber-filler composite was produced. Then, similar evaluations were performed. It should be noted that the kneading with the kneader was performed under the conditions of a filling factor of 60%, a number of revolutions of 60 rpm, a kneading time of 3 minutes, and a falling temperature of 140°C.

Table 2 shows the results.

<Example 6>

The production of a rubber composition and a tire was performed in the same manner as in Example 1 except the following. In the production of the rubber composition of Example 1, the test composition 2 was used instead of the test composition 1, a kneader having mating rotors (Neo Meler manufactured by Mitsubishi Heavy Industries, Ltd.) was used instead of the biaxial kneading extruder, and kneading was performed three times so that a rubber-filler composite was produced. Then, similar evaluations were performed. It should be noted that the kneading with the kneader was performed under the conditions of a filling factor of 73%, a number of revolutions of 50 rpm, a kneading time of 5 minutes, and a falling temperature of 160°C.

Table 2 shows the results.

<Example 7>

The test composition 1 was loaded into a conical squeezer and dehydrated. After that, the resultant was dried with an expander drying machine at a discharge temperature of 150°C. The driedproduct was kneaded with a kneader having mating rotors (Intermix K1 manufactured by HITACHI MACHINE Co., Ltd.) so that a rubber-filler composite was produced. After that, the production of a rubber composition and a tire was performed in the same manner as in Example 1 by adding the rubber compounding materials. Then, similar evaluations were performed.

It should be noted that the kneading with the kneader was performed under the conditions of a filling factor of 60%, a number of revolutions of 70 rpm, a kneading time of 3 minutes, and a falling temperature of 140°C. Table 2 shows the results.

<Example 8>

The production of a rubber composition and a tire was performed in the same manner as in Example 5 except the following. In the production of the rubber composition of Example 5, a Banbury mixer (00C Banbury manufactured by Kobe Steel, Ltd.) was used instead of the kneader having mating rotors, and preliminary kneading was performed four times at a number of revolutions of 70 rpm, a filling factor of 70%, and a falling temperature of 155°C for a kneading time of 3 minutes so that a rubber-filler composite was produced. Then, similar evaluations were performed.

Table 2 shows the results.

<Example 9>

The production of a rubber composition and a tire was performed in the same manner as in Example 7 except the following. In the production of the rubber composition of Example 7, the test composition 4 was used instead of the test composition 1 so that a rubber-filler composite was produced. Then, similar evaluations were performed.

Table 2 shows the results.

[Table 2]

Table 2

| Result of analysis | Composition | Density | Example 1 | Example 2 | Example 3 | Example 4 | Example 5 | Example 6 | Example 7 | Example 8 | Example 9 |
|---|---|---|---|---|---|---|---|---|---|---|---|
| | Natural rubber (part(s) by mass) | 0.93 | 100 | 100 | 100 | 100 | 100 | 100 | 100 | 100 | 100 |
| | Carbon black (part(s) by mass) | 1.85 | 47.1 | 47.6 | 47.5 | 47.3 | 47.4 | 47.3 | 47.3 | 47.3 | 47.3 |
| | Solvent extraction (part(s) by mass) | 1.00 | 7.4 | 7.5 | 7.5 | 7.5 | 7.6 | 7.5 | 7.5 | 7.5 | 7.5 |
| | Sulfur (part(s) by mass) | 1.94 | 2.3 | 2.1 | 2.2 | 2.2 | 2.1 | 2.2 | 2.2 | 2.2 | 2.3 |
| | ZnO (part(s) by mass) | 5.57 | 3.1 | 3.0 | 3.0 | 3.0 | 3.2 | 3.0 | 3.0 | 3.0 | 3.0 |
| | $SiO_2$ (part(s) by mass) | 1.95 | 0.1 | 0 | 0 | 0 | 0 | 0 | 0 | 0 | 0 |
| | Other (part(s) by mass) | 1.00 | 0.4 | 0.4 | 0.6 | 0.6 | 0.5 | 0.6 | 0.6 | 0.6 | 0.6 |
| | Total amount (part(s) by mass) | - | 160.4 | 160.6 | 160.8 | 160.6 | 160.8 | 160.6 | 160.6 | 160.6 | 160.7 |
| Theoretical density $1/\Sigma(\phi i/di)$ | | | 1.125 | 1.125 | 1.125 | 1.124 | 1.125 | 1.124 | 1.124 | 1.124 | 1.124 |
| Actual density di | | | 1.093 | 1.094 | 1.098 | 1.098 | 1.094 | 1.099 | 1.097 | 1.097 | 1.100 |
| Density ratio | | | 0.972 | 0.973 | 0.976 | 0.977 | 0.972 | 0.978 | 0.976 | 0.976 | 0.978 |
| Evaluation | Tire weight (kg) | | 53.58 | 53.60 | 53.65 | 53.66 | 53.77 | 52.95 | 53.63 | 53.63 | 53.65 |
| | Rolling resistance (index) | | 102.5 | 102.0 | 102.0 | 101.0 | 102.5 | 102.3 | 101.2 | 102.1 | 102.1 |
| | Abrasion resistance (index) | | 101.0 | 100.0 | 101.0 | 103.0 | 102.0 | 102.2 | 102.8 | 102.1 | 102.0 |

<Comparative Example 1>

The production of a rubber composition and a tire was performed in the same manner as in Example 1 except that in the production of the rubber composition of Example 1, the compounding and vulcanization of the rubber compounding materials were performed by using the test composition 2 instead of the test composition 1 and a Banbury mixer (00C Banbury manufactured by Kobe Steel, Ltd.) instead of the kneader having mating rotors (Intermix K1 manufactured by HITACHI MACHINE Co., Ltd.). Then, similar evaluations were performed. It should be noted that the kneading with the Banbury mixer was performed under the conditions of a filling factor of 70%, a number of revolutions of 70 rpm, a kneading time of 3 minutes, and a falling temperature of 155°C.

Table 3 shows the results.

<Comparative Example 2>

The production of a rubber composition and a tire was performed in the same manner as in Example 1 except that in the production of the rubber composition of Example 1, the kneading with the biaxial kneading extruder was performed while the screw segment for conveyance was used for the entire length of each rotation axis. Then, similar evaluations were performed.

Table 3 shows the results.

<Comparative Example 3>

The production of a rubber composition and a tire was performed in the same manner as in Example 1 except that in the production of the rubber composition of Example 1, the test composition 3 was used instead of the test composition 1. Then, similar evaluations were performed.

Table 3 shows the results.

<Comparative Example 4>

The production of a rubber composition and a tire was performed in the same manner as in Comparative Example 1 except that in the production of the rubber composition of Comparative Example 1, the compounding and vulcanization of the rubber compounding materials were performed by using the test composition 3 instead of the test composition 2. Then, similar evaluations were performed.

Table 3 shows the results.

<Comparative Example 5>

47.1 Parts by mass of carbonblack (N220: "SEAST 6" manufactured by TOKAI CARBON CO., LTD.), 1.7 parts by mass of an age resister (N-(1,3-dimethylbutyl)-N'-phenyl-p-phenylenediamine, "NOCRAC 6C" manufactured by OUCHI SHINKO CHEMICAL INDUSTRIAL CO., LTD.), and 2.4 parts by mass of stearic acid (Stearic Acid #700 manufactured by New Japan Chemical Co., Ltd.) were added to 100 parts by mass of a natural rubber, and then the mixture was subjected to first kneading with a Banbury mixer (00C Banbury manufactured by Kobe Steel, Ltd.). Next, 0.4 part by mass of an age resister (NONFLEX RD manufactured by Seiko Chemical Co., Ltd.), 0.9 part by mass of a vulcanization accelerator (CZ) ("NOCCELER CZ" manufactured by OUCHI SHINKO CHEMICAL INDUSTRIAL CO., LTD., N-cyclohexylbenzothiazole-2-sulfenamide)), 1.5 parts by mass of a vulcanization accelerator (DM) ("NOCCELER DM" manufactured by OUCHI SHINKO CHEMICAL INDUSTRIAL Co., LTD., di-2-benzothiazyl-disulfide), 3.1 parts by mass of zinc white, 0.2 part by mass of a retarder (Retarder CTP manufactured by Toray Fine Chemicals Co., Ltd.), and 2.2 parts by mass of sulfur were added to the resultant, and then the mixture was subjected to second kneading with the Banbury mixer. The resultant composition was vulcanized by an ordinary method. Thus, a vulcanized rubber composition was obtained. It should be noted that each kneading with the Banbury mixer was performed under the conditions of a filling factor of 70%, a number of revolutions of 70 rpm, a kneading time of 3 minutes, and a falling temperature of 155°C.

In addition, a tire was produced with the rubber composition, and was then evaluated in the same manner as in Example 1.

Table 3 shows the results.

<Comparative Example 6>

In the production of the rubber composition of Comparative Example 5, 100 parts by mass of the natural rubber and 47.1 parts of the carbon black were kneaded with the Banbury mixer at a number of revolutions of 70 rpm and a filling factor of 70% for 3 minutes. After that, stearic acid, the age resister, and the wax shown in Table 1 were added to the resultant, and then the mixture was kneaded at a number of revolutions of 70 rpm and a filling factor of 70% for 3 minutes. Further, the resultant was subjected to second kneading so that a rubber composition was produced. Next, a tire was produced and similarly evaluated.

Table 3 shows the results.

<Comparative Example 7>

The production of a rubber composition and a tire was performed in the same manner as in Comparative Example 5 except that kneading was performed with a kneader having mating rotors (Intermix K1 manufactured by HITACHI MACHINE Co., Ltd.) instead of the Banbury mixer having tangential rotors in the production of the rubber composition of Comparative Example 5. Then, similar evaluations were performed. It should be noted that the kneading with the above-mentioned kneader was performed under the conditions of a filling factor of 60%, a number of revolutions of 60 rpm, a kneading time of 3 minutes, and a falling temperature of 140°C.

Table 3 shows the results.

[Table 3]

Table 3

| | Composition | Density | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Result of analysis | Natural rubber (part(s) by mass) | 0.93 | 100 | 100 | 100 | 100 | 100 | 100 | 100 |
| | Carbon black (part(s) by mass) | 1.85 | 47.3 | 47.1 | 47.6 | 47.4 | 47.4 | 47.6 | 47.2 |
| | Solvent extraction(part(s) by mass) | 1.00 | 7.5 | 7.6 | 7.4 | 7.4 | 7.5 | 7.4 | 7.4 |
| | Sulfur (part(s) by mass) | 1.94 | 2.1 | 2.2 | 2.2 | 2.3 | 2.1 | 2.3 | 2.3 |
| | ZnO (part(s) by mass) | 5.57 | 3.0 | 3.1 | 3.1 | 3.1 | 3.0 | 3.0 | 3.1 |
| | $SiO_2$ (part(s) by mass) | 1.95 | 0 | 0.1 | 0 | 0 | 0.1 | 0.1 | 0 |
| | Other (part(s) by mass) | 1.00 | 0.5 | 0.5 | 0.6 | 0.6 | 0.5 | 0.5 | 0.4 |
| | Total amount (part(s) by mass) | - | 160.4 | 160.6 | 160.9 | 160.8 | 160.6 | 160.9 | 160.4 |
| Theoretical density $1/\Sigma\,(\phi i/di)$ | | | 1.124 | 1.124 | 1.126 | 1.125 | 1.124 | 1.126 | 1.125 |
| Actual density di | | | 1.084 | 1.090 | 1.090 | 1.090 | 1.104 | 1.109 | 1.113 |
| Density ratio | | | 0.965 | 0.969 | 0.968 | 0.969 | 0.982 | 0.985 | 0.989 |
| Evaluation | Tire weight (kg) | | 53.51 | 53.55 | 52.99 | 53.61 | 53.70 | 53.88 | 53.98 |
| | Rolling resistance (index) | | 102.1 | 102.3 | 100.0 | 100.5 | 100.0 | 99.5 | 99.1 |
| | Abrasion resistance (index) | | 93.2 | 94.5 | 98.5 | 98.7 | 100.0 | 102.0 | 101.0 |

EP 2 423 253 B1

19

As is apparent from the results shown in Tables 2 and 3, a tire using a rubber composition of each example whose density ratio ranged from 0.970 or more to 0.980 or less not only was able to achieve a weight reduction but also showed good results for both abrasion resistance and rolling resistance.

On the other hand, a tire using a rubber composition whose density ratio deviated from the range could not satisfy performance comparable to or higher than a conventional one in terms of both abrasion resistance and rolling resistance.

**Claims**

1.  A rubber composition, comprising:

    a rubber component formed of a diene-based rubber; and
    a filler,
    wherein when an actual density determined by JIS K6268 method A is represented by dc, and a density and a mass fraction of a component i determined by constituent analysis are represented by di and $\phi$ i, respectively, the actual density, the density, and the mass fraction satisfy a relationship represented by the following formula (1).

$$0.970 \leq dc \cdot \Sigma(\phi i/di) \leq 0.980 \quad \cdots \quad (1)$$

2.  The rubber composition according to claim 1, wherein the filler comprises at least one kind of carbon black, silica, and an inorganic filler represented by a general formula (I):

    $$nM \cdot xSiO_y \cdot zH_2O \qquad (I)$$

    where M represents at least one kind selected from a metal selected from aluminum, magnesium, titanium, calcium, and zirconium, and oxides or hydroxides of the metals, hydrates thereof, and carbonates of the metals, and n, x, y, and z represent an integer of 1 to 5, an integer of 0 to 10, an integer of 2 to 5, and an integer of 0 to 10, respectively.

3.  The rubber composition according to claim 1 or 2, wherein the diene-based rubber comprises at least one kind selected from a natural rubber, a polybutadiene rubber, and a styrene-butadiene copolymerized rubber.

4.  The rubber composition according to any one of claims 1 to 3, wherein a content of the filler is 10 parts by mass or more and 100 parts by mass or less with respect to 100 parts by mass of the rubber component.

5.  A pneumatic tire using the rubber composition according to any one of claims 1 to 4.

6.  A method of producing the rubber composition according to any one of claims 1 to 4, comprising:

    a rubber-filler composite-producing step of dispersing a filler in a rubber component formed of a diene-based rubber in advance to produce a rubber-filler composite; and
    a mixing step of mixing the rubber-filler composite and a rubber compounding material.

7.  The method of producing a rubber composition according to claim 6, wherein:
    the rubber-filler composite-producing step comprises the step of dispersing the filler in the rubber component with at least one of a batch-type kneading apparatus and a continuous kneading apparatus; and
    the mixing step comprises the step of mixing the rubber-filler composite and the rubber compounding material with a batch-type kneading apparatus.

8.  The method of producing a rubber composition according to claim 6 or 7, wherein the rubber-filler composite-producing step comprises the step of producing the rubber-filler composite with a wet master batch.

9.  The method of producing a rubber composition according to claim 8, wherein:

    the wet master batch is obtained by mixing a rubber liquid and a slurry liquid prepared by dispersing the filler in a dispersion solvent; and

a 24M4 DBP oil absorption of the dry filler recovered from the slurry liquid measured in conformity with ISO 6894 is 93% or more of a 24M4 DBP oil absorption of the filler before the dispersion in the dispersion solvent.

**10.** The method of producing a rubber composition according to claim 8 or 9, wherein:

the rubber-filler composite-producing step comprises the step of performing kneading with a biaxial kneading extruder; and

a kneading block is used for 10% or more of a length of a rotation axis in the biaxial kneading extruder.

**11.** The method of producing a rubber composition according to claim 8 or 9, wherein:

the rubber-filler composite-producing step comprises the step of performing kneading with at least one of a Banbury mixer and a kneader having mating rotors after kneading with a biaxial kneading extruder; and

a kneading block is used for less than 10% of a length of a rotation axis in the biaxial kneading extruder.

**12.** The method of producing a rubber composition according to claim 8 or 9, wherein the rubber-filler composite-producing step comprises the step of repeating kneading with a kneader having mating rotors twice or more.

**13.** The method of producing a rubber composition according to claim 8 or 9, wherein the rubber-filler composite-producing step comprises the step of repeating kneading with a Banbury mixer twice or more.

**Patentansprüche**

**1.** Kautschukzusammensetzung umfassend:

eine Kautschukkomponente, die aus einem Kautschuk auf Dienbasis gebildet ist;

einen Füllstoff,

wobei, wenn eine tatsächliche Dichte, durch das JIS K6268-Verfahren A bestimmt, durch dc dargestellt ist und eine Dichte und eine Massenfraktion einer Komponente i, durch Konstituentenanalyse bestimmt, durch di bzw. φ i dargestellt sind, die tatsächliche Dichte, die Dichte und die Massenfraktion einer Beziehung entsprechen, die durch die folgende Formel (1) dargestellt ist

$$0{,}970 \le dc \cdot \Sigma(\phi\ i/di) \le 0{,}980 \ \cdots\ (1)$$

**2.** Kautschukzusammensetzung nach Anspruch 1, wobei der Füllstoff mindestens eine Art Ruß, Siliciumdioxid und einen anorganischen Füllstoff umfasst, dargestellt durch eine allgemeine Formel (I):

$$nM \cdot xSiO_y \cdot zH_2O \qquad\qquad (I)$$

wobei M mindestens eine Art darstellt ausgewählt unter einem Metall ausgewählt unter Aluminium, Magnesium, Titan, Calcium und Zirkonium und Oxiden oder Hydroxiden der Metalle, Hydraten derselben und Carbonaten der Metalle und n, x, y und z eine ganze Zahl von 1 bis 5, eine ganze Zahl von 0 bis 10, eine ganze Zahl von 2 bis 5 bzw. eine ganze Zahl von 0 bis 10 darstellen.

**3.** Kautschukzusammensetzung nach Anspruch 1 oder 2, wobei der Kautschuk auf Dienbasis mindestens eine Art umfasst ausgewählt unter einem Naturkautschuk, einem Polybutadienkautschuk und einem copolymerisierten Styrol-Butadien-Kautschuk.

**4.** Kautschukzusammensetzung nach einem der Ansprüche 1 bis 3, wobei ein Gehalt des Füllstoffs 10 Massenteile oder mehr und 100 Massenteile oder weniger mit Bezug auf 100 Massenteile der Kautschukkomponente beträgt.

**5.** Luftreifen, bei dem die Kautschukzusammensetzung nach einem der Ansprüche 1 bis 4 verwendet wird.

**6.** Verfahren zur Herstellung der Kautschukzusammensetzung nach einem der Ansprüche 1 bis 4, umfassend:

einen Schritt des Herstellens eines Kautschuk-Füllstoff-Verbundstoffs des Dispergierens eines Füllstoffs in einer Kautschukkomponente, die aus einem Kautschuk auf Dienbasis gebildet ist, im Voraus, um einen Kautschuk-Füllstoff-Verbundstoff herzustellen; und

einen Mischschritt des Mischens des Kautschuk-Füllstoff-Verbundstoffs und eines Kautschukcompoundiermaterials.

7. Verfahren zur Herstellung einer Kautschukzusammensetzung nach Anspruch 6, wobei:

der Schritt des Herstellens eines Kautschuk-Füllstoff-Verbundstoffs den Schritt des Dispergierens des Füllstoffs in der Kautschukkomponente mit mindestens einem Knetapparat vom Chargentyp und einem kontinuierlichen Knetapparat umfasst; und

der Mischschritt den Schritt des Mischens des Kautschuk-Füllstoff-Verbundstoffs und des Kautschukcompoundiermaterials mit einem Knetapparat vom Chargentyp umfasst.

8. Verfahren zur Herstellung einer Kautschukzusammensetzung nach Anspruch 6 oder 7, wobei der Schritt des Herstellens eines Kautschuk-Füllstoff-Verbundstoffs den Schritt des Herstellens des Kautschuk-Füllstoff-Verbundstoffs mit einem nassen Masterbatch umfasst.

9. Verfahren zur Herstellung einer Kautschukzusammensetzung nach Anspruch 8, wobei:

der nasse Masterbatch durch Mischen einer Kautschukflüssigkeit und einer Aufschlämmungsflüssigkeit erhalten wird, die durch Dispergieren des Füllstoffs in einem Dispersionslösungsmittel hergestellt wird; und

eine 24M4 DPD-Ölabsorption des trockenen Füllstoffs, der aus der Aufschlämmungsflüssigkeit gewonnen wird, ISO 6894 gemäß gemessen, 93 % oder mehr einer 24M4 DBP-Ölsabsorption des Füllstoffs vor dem Dispergieren in dem Dispersionslösungsmittel beträgt.

10. Verfahren zur Herstellung einer Kautschukzusammensetzung nach Anspruch 8 oder 9, wobei; der Schritt des Herstellens eines Kautschuk-Füllstoff-Verbundstoffs den Schritt des Durchführens von Kneten mit einem biaxialen Knetextruder umfasst; und

ein Knetblock für 10 % oder mehr einer Länge einer Rotationsachse in dem biaxialen Knetextruder verwendet wird.

11. Verfahren zur Herstellung einer Kautschukzusammensetzung nach Anspruch 8 oder 9, wobei:

der Schritt des Herstellens eines Kautschuk-Füllstoff-Verbundstoffs den Schritt des Durchführens von Kneten mit mindestens einem von einem Banbury-Mischer und einer Knetvorrichtung, die zusammenpassende Rotoren aufweisen, nach dem Kneten mit dem biaxialen Knetextruder umfasst; und

ein Knetblock für weniger als 10 % einer Länge einer Rotationsachse in dem biaxialen Knetextruder verwendet wird.

12. Verfahren zur Herstellung einer Kautschukzusammensetzung nach Anspruch 8 oder 9, wobei der Schritt des Herstellens eines Kautschuk-Füllstoff-Verbundstoffs den Schritt des Wiederholens des Knetens mit einer Knetvorrichtung, die aufeinanderpassende Rotoren aufweist, zweimal oder häufiger umfasst.

13. Verfahren zur Herstellung einer Kautschukzusammensetzung nach Anspruch 8 oder 9, wobei der Schritt des Herstellens eines Kautschuk-Füllstoff-Verbundstoffs den Schritt des Wiederholens des Knetens mit einer Banbury-Mischvorrichtung zweimal oder häufiger umfasst.

**Revendications**

1. Composition de caoutchouc comprenant:

un composant caoutchouteux formé d'un caoutchouc à base de diène; et
une matière de charge,
dans laquelle, lorsqu'une masse volumique effective déterminée par la méthode A de la norme JIS K6268 est représentée par de et qu'une masse volumique ainsi qu'une fraction massique d'un composant i déterminées par une analyse de constituants sont représentées par di et $\phi$i, respectivement, la masse volumique effective, la masse volumique et la fraction massique satisfont à une relation représentée par la formule (1) suivante:

$$0{,}970 \le dc.\Sigma \, (\phi i/di) \le 0{,}980 \ldots \qquad (1).$$

**2.** Composition de caoutchouc selon la revendication 1, dans laquelle la matière de charge comprend au moins un type de matière parmi le noir de carbone, le dioxyde de silicium et une matière de charge inorganique représentée par une formule générale (I):

$$nM \cdot xSiO_y \cdot zH_2O \qquad (I),$$

où M représente au moins un type choisi parmi un métal qui est soit l'aluminium, soit le magnésium, soit le titane, soit le calcium, soit le zirconium, des oxydes ou des hydroxydes de ces métaux, des hydrates de ces métaux et des carbonates de ces métaux, et n, x, y et z représentent un nombre entier de 1 à 5, un nombre entier de 0 à 10, un nombre entier de 2 à 5 et un nombre entier de 0 à 10, respectivement.

**3.** Composition de caoutchouc selon la revendication 1 ou 2, dans laquelle le caoutchouc à base de diène comprend au moins un type choisi parmi un caoutchouc naturel, un caoutchouc à base de polybutadiène et un caoutchouc copolymérisé à base de styrène-butadiène.

**4.** Composition de caoutchouc selon l'une quelconque des revendications 1 à 3, dans laquelle une teneur de la matière de charge représente au moins 10 parties en masse et au plus 100 parties en masse par rapport à 100 parties en masse du composant caoutchouteux.

**5.** Pneumatique utilisant la composition de caoutchouc selon l'une quelconque des revendications 1 à 4.

**6.** Procédé de production de la composition de caoutchouc selon l'une quelconque des revendications 1 à 4, comprenant:

une étape de production d'un composite caoutchouc-matière de charge consistant à disperser au préalable une matière de charge dans un composant caoutchouteux formé d'un caoutchouc à base de diène pour produire un composite caoutchouc-matière de charge; et
une étape de mélangeage consistant à mélanger le composite caoutchouc-matière de charge et une matière entrant dans la formulation du caoutchouc.

**7.** Procédé de production d'une composition de caoutchouc selon la revendication 6, dans lequel:

l'étape de production du composite caoutchouc-matière de charge comprend l'étape consistant à disperser la matière de charge dans le composant caoutchouteux au moyen d'au moins un dispositif de malaxage par intermittence et/ou dispositif de malaxage en continu; et
l'étape de mélangeage comprend l'étape consistant à mélanger le composite caoutchouc-matière de charge et la matière entrant dans la formulation du caoutchouc au moyen d'un dispositif de malaxage par intermittence.

**8.** Procédé de production d'une composition de caoutchouc selon la revendication 6 ou 7, dans lequel l'étape de production du composite caoutchouc-matière de charge comprend l'étape consistant à produire le composite caoutchouc-matière de charge avec un mélange maître humide.

**9.** Procédé de production d'une composition de caoutchouc selon la revendication 8, dans lequel:

le mélange maître humide est obtenu en mélangeant un caoutchouc liquide et une suspension épaisse liquide préparée en dispersant la matière de charge dans un solvant de dispersion; et
une absorption d'huile 24M4DBP de la matière de charge sèche récupérée à partir de la suspension épaisse liquide, mesurée conformément à l'ISO 6894, correspond à au moins 93 % d'une absorption d'huile 24M4DBP de la matière de charge avant la dispersion dans le solvant de dispersion.

**10.** Procédé de production d'une composition de caoutchouc selon la revendication 8 ou 9, dans lequel:

l'étape de production du composite caoutchouc-matière de charge comprend l'étape consistant à procéder au malaxage au moyen d'une extrudeuse-malaxeuse à deux axes; et

un bloc de malaxage est utilisé pour au moins 10 % de la longueur d'un axe de rotation dans l'extrudeuse-malaxeuse à deux axes.

11. Procédé de production d'une composition de caoutchouc selon la revendication 8 ou 9, dans lequel:

l'étape de production d'un composite caoutchouc-matière de charge comprend l'étape consistant à procéder au malaxage au moyen d'au moins un mélangeur de type Banbury et/ou un malaxeur à rotors conjugués après le malaxage avec une extrudeuse-malaxeuse à deux axes; et
un bloc de malaxage est utilisé pour moins de 10 % de la longueur d'un axe de rotation dans l'extrudeuse-malaxeuse à deux axes.

12. Procédé de production d'une composition de caoutchouc selon la revendication 8 ou 9, dans lequel l'étape de production du composite caoutchouc-matière de charge comprend l'étape consistant à répéter le malaxage au moyen d'un malaxeur à rotors conjugués deux fois ou plus.

13. Procédé de production d'une composition de caoutchouc selon la revendication 8 ou 9, dans lequel l'étape de production du composite caoutchouc-matière de charge comprend l'étape consistant à répéter le malaxage au moyen d'un mélangeur de type Banbury deux fois ou plus.

**EP 2 423 253 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7309974 A
- JP 7309975 A
- JP 2002212342 A
- JP 10265616 A
- JP 2002012708 A